# EUROPEAN PATENT APPLICATION

(11) **EP 3 916 677 A1**
(43) Date of publication of application: **01.12.2021**
(21) Application number: 21175257.1
(22) Date of filing: 21.05.2021
(51) Int. Cl.: G06T 7/30

(54) **THREE-DIMENSIONAL MEASUREMENT DEVICE**

(30) Priority: 29.05.2020 US 202063031986 P; 26.06.2020 US 202063044678 P; 07.05.2021 US 202117314631
(71) Applicant: Faro Technologies, Inc., Lake Mary, FL 32746-6204 (US)
(72) Inventor: DORING, Daniel, 70825 Korntal-Münchingen (DE); DEBITSCH, Rasmus, 70825 Korntal-Münchingen (DE); HILLEBRAND, Gerrit, 70825 Korntal-Münchingen (DE); OSSIG, Martin, 70825 Korntal-Münchingen (DE)
(74) Representative: McNamara, Kathryn

(57) **Abstract**

A method and system of correcting a point cloud is provided. The method includes selecting a region within the point cloud. At least two objects within the region are identified. The at least two objects are re-aligned. At least a portion of the point cloud is aligned based at least in part on the realignment of the at least two objects.

## Description

### BACKGROUND

The subject matter disclosed herein relates to a handheld three-dimensional (3D) measurement device, and particularly to correcting a registration of a point cloud generated by a 3D triangulation scanner

A 3D triangulation scanner, also referred to as a 3D imager, is a portable device having a projector that projects light patterns on the surface of an object to be scanned. One (or more) cameras, having a predetermined position and alignment relative to the projector, records images of the light pattern on the surface of an object. The three-dimensional coordinates of elements in the light pattern can be determined by trigonometric methods, such as by using triangulation. Other types of 3D measuring devices may also be used to measure 3D coordinates, such as those that use time of flight techniques (e.g., laser trackers, laser scanners or time of flight cameras) for measuring the amount of time it takes for light to travel to the surface and return to the device.

It is desired to have a handheld 3D measurement device that is easier to use and that gives additional capabilities and performance. One limitation found in handheld 3D scanners today is their relatively poor performance in sunlight. In some cases, the amount of sunlight-related optical power reaching photosensitive arrays of handheld 3D scanners greatly exceeds the optical power projected by the scanner and reflected off the object under test.

Another issue that arises with the use of 3D measurement devices is the registration of points of surfaces that are scanned more than once. As a scan is performed, it is possible that the operator returns to an area (such as the start of the scan for example) and rescans the same surfaces. In some cases there may be an accumulated error (sometimes referred to as drift) that occurs over the course of the scan. As a result, for the re-scanned surfaces, the points from the initial portion of the scan may not align with the later portion of the scan. When this happens, the resulting point cloud may show double surfaces or edges for the rescanned surface.

Accordingly, while existing handheld 3D triangulation scanners are suitable for their intended purpose, the need for improvement remains, particularly in providing a method of correcting the registration of portions of a point cloud that are scanned multiple times.

### BRIEF DESCRIPTION

According to one aspect of the disclosure a method of correcting a point cloud is provided. The method includes selecting a region within the point cloud. At least two objects within the region are identified. The at least two objects are re-aligned. At least a portion of the point cloud is aligned based at least in part on the realignment of the at least two objects.

In addition to one or more of the features described herein above, or as an alternative, further embodiments of the method may include the selection of the region being based at least in part on a metadata acquired during an acquisition of the point cloud. In addition to one or more of the features described herein above, or as an alternative, further embodiments of the method may include the metadata having at least one of: a number of features; a number of targets; a quality attribute of the targets; a number of 3D points in the point cloud; a tracking stability parameter; and parameters related to the movement of a scanning device during the acquisition of the point cloud.

In addition to one or more of the features described herein above, or as an alternative, further embodiments of the method may include searching through the point cloud and identifying points within the region prior to identifying the at least two objects. In addition to one or more of the features described herein above, or as an alternative, further embodiments of the method may include the at least two objects having at least one of: a geometric primitive; at least one surface of a geometric primitive; texture; a well-defined 3D geometry, a plane, and a plurality of planes.

In addition to one or more of the features described herein above, or as an alternative, further embodiments of the method may include the geometric primitive being one or more of a cube, a cylinder, a sphere, a cone, a pyramid, or a torus. In addition to one or more of the features described herein above, or as an alternative, further embodiments of the method may include the texture being a color, a plurality of adjacent colors, a machine readable symbol, or a light pattern projected onto a surface.

In addition to one or more of the features described herein above, or as an alternative, further embodiments of the method may include the at least two objects being a first object and a second object, the first object being defined by a plurality of first points and the second object being define by a plurality of second points, the plurality of first points having a first attribute, the plurality of second points having a second attribute. In addition to one or more of the features described herein above, or as an alternative, further embodiments of the method may include the first attribute being a first time and the second attribute is a second time, the second time being different than the first time.

In addition to one or more of the features described herein above, or as an alternative, further embodiments of the method may include the point cloud being at least partially composed of a plurality of frames, each frame having at least one point. In addition to one or more of the features described herein above, or as an alternative, further embodiments of the method may include dividing the region into a plurality of voxels; dentifying a plurality of frames associated with the region; for each frame within the plurality of frames, determining a percentage of points located within the plurality of voxels; and assigning the plurality of frames into groups based at least in part on the percentage of points.

In addition to one or more of the features described herein above, or as an alternative, further embodiments of the method may include the assigning of the plurality of frames into groups being further based at least in part on: a number of features; a number of targets; a quality attribute of the targets; a number of 3D points in the point cloud; a tracking stability parameter; and a parameter related to the movement of the device.

In addition to one or more of the features described herein above, or as an alternative, further embodiments of the method may include determining at least one correspondence between the at least two objects. In addition to one or more of the features described herein above, or as an alternative, further embodiments of the method may include assigning an identifier to objects within the point cloud, and wherein the at least one correspondence is based at least in part on the identifier of the at least two objects.

In addition to one or more of the features described herein above, or as an alternative, further embodiments of the method may include the at least one correspondence being based at least in part on an attribute that is substantially the same for the at least two objects. In addition to one or more of the features described herein above, or as an alternative, further embodiments of the method may include the attribute is a shape type, the shape type being one of a plane, a plurality of connected planes, a sphere, a cylinder, or a well defined 3D geometry. In addition to one or more of the features described herein above, or as an alternative, further embodiments of the method may include the attribute being a texture.

In addition to one or more of the features described herein above, or as an alternative, further embodiments of the method may include the at least one correspondence being based at least in part on at least one position coordinate of each of the at least two objects. In addition to one or more of the features described herein above, or as an alternative, further embodiments of the method may include comparing the distance between the at least one position coordinate of each of the at least two objects to a predetermined distance threshold.

In addition to one or more of the features described herein above, or as an alternative, further embodiments of the method may include the at least one correspondence being based at least in part on at least one angular coordinate of each of the at least two objects. In addition to one or more of the features described herein above, or as an alternative, further embodiments of the method may include comparing the distance between the at least one angular coordinate for each of the at least two objects to a predetermined angular threshold.

In addition to one or more of the features described herein above, or as an alternative, further embodiments of the method may include the at least one correspondence being based at least in part on a consistency criterion. In addition to one or more of the features described herein above, or as an alternative, further embodiments of the method may include the consistency criterion includes two planes penetrating each other. In addition to one or more of the features described herein above, or as an alternative, further embodiments of the method may include the at least one correspondence being based at least in part on at least one feature in the surrounding of at least one of the at least two objects.

In addition to one or more of the features described herein above, or as an alternative, further embodiments of the method may include the alignment of the at least two objects or at least part of the point cloud being an alignment of at least one degree of freedom of the at least two objects. In addition to one or more of the features described herein above, or as an alternative, further embodiments of the method may include the alignment of the at least two objects or at least part of the point cloud includes an alignment of between two degrees of freedom and six degrees of freedom of the at least two objects or the at least part of the point cloud.

In addition to one or more of the features described herein above, or as an alternative, further embodiments of the method may include the alignment of at least a portion of the point cloud is based at least in part on at least one object quality parameter associated with at least one of the at least two objects. In addition to one or more of the features described herein above, or as an alternative, further embodiments of the method may include defining a first object from the alignment of the at least two objects; generating a second point cloud, the second point cloud including data from the selected region; identifying at least one second object in the second point cloud; identifying a correspondence between at least one second object in the second point cloud and the first object; and aligning the second point cloud to the point cloud based at least in part on an alignment of the first object and the second object.

In addition to one or more of the features described herein above, or as an alternative, further embodiments of the method may include the at least one second object being defined by a realignment of two objects in the second point cloud using the steps described herein above.

In accordance with another aspect of the disclosure, a system for repairing a point cloud is provided. The system includes one or more processors that are responsive to executable computer instructions when executed on the one or more processors for performing a method of repairing a point cloud that is described herein.

In accordance with another aspect of the disclosure a non-transitory computer-readable medium having program instructions embodied therewith is provided. The program instructions are readable by a processor to cause the processor to perform a method performing a repair of a point cloud generated by a scanner device in a surrounding environment, using a method described herein.

These and other advantages and features will become more apparent from the following description taken in conjunction with the drawings.

### BRIEF DESCRIPTION OF DRAWINGS

The subject matter, which is regarded as the disclosure, is particularly pointed out and distinctly claimed in the claims at the conclusion of the specification. The foregoing and other features, and advantages of the disclosure are apparent from the following detailed description taken in conjunction with the accompanying drawings in which:
FIG. 1 is a front perspective view of a 3D triangulation scanner according to an embodiment of the disclosure;
FIG. 2 is a rear perspective view of the 3D triangulation scanner according to an embodiment of the disclosure;
FIG. 3A and FIG. 3B are block diagrams of electronics coupled to the triangulation scanner according to an embodiment of the disclosure;
FIG. 4 illustrates a method of interconnecting a mobile PC with a mobile display using USB tethering according to an embodiment of the disclosure;
FIG. 5 is a schematic representation of a triangulation scanner having a projector and a camera according to an embodiment of the disclosure;
FIG. 6A is a schematic representation of a triangulation scanner having a projector and two cameras according to an embodiment of the disclosure;
FIG. 6B is a perspective view of a triangulation scanner having a projector, two triangulation cameras, and a registration camera according to an embodiment of the disclosure;
FIG. 7 is a schematic representation illustrating epipolar terminology;
FIG. 8 is a schematic representation illustrating how epipolar relations may be advantageously used in when two cameras and a projector are placed in a triangular shape according to an embodiment of the disclosure;
FIG. 9 illustrates a system in which 3D coordinates are determined for a grid of uncoded spots projected onto an object according to an embodiment of the disclosure;
FIG. 10 is a schematic illustration of an operator performing a scan in accordance with an embodiment;
FIG. 11A is an illustration of a point cloud acquired during the scan of FIG. 10;
FIG. 11B is an illustration of the point cloud of FIG. 11A with a correction of the registration errors;
FIG. 12 is a flow diagram of a method of correcting registration errors in a point cloud according to an embodiment of the disclosure;
FIG. 13 is a flow diagram of a method of correcting registration errors in a point cloud according to another embodiment of the disclosure;
FIG. 14 is a histogram illustrating frame groups defined by the method of FIG. 12 according to an embodiment of the disclosure; and
FIG. 15 is a schematic diagram of a computing system that can implement one or more embodiments of the present disclosure

The detailed description explains embodiments of the disclosure, together with advantages and features, by way of example with reference to the drawings.

### DETAILED DESCRIPTION

Embodiments of the present disclosure provide for a method and system for improving the quality or accuracy of a point cloud obtained by a three-dimensional coordinate scanner. Further embodiments providing for improving the quality or accuracy of a point cloud in areas that have been scanned multiple times. Still further embodiments provide for the correction of accumulated errors or drift in a point cloud.

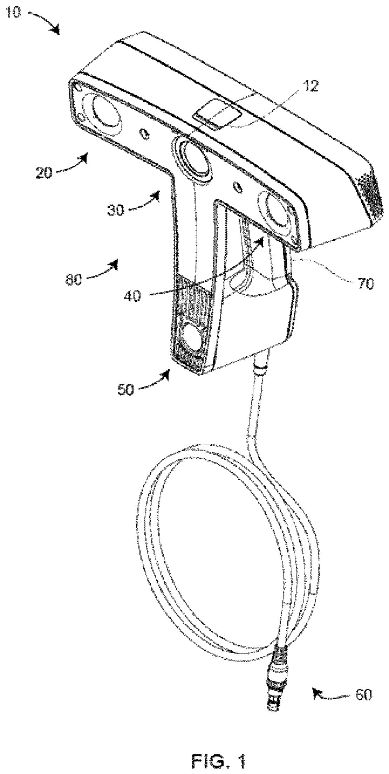

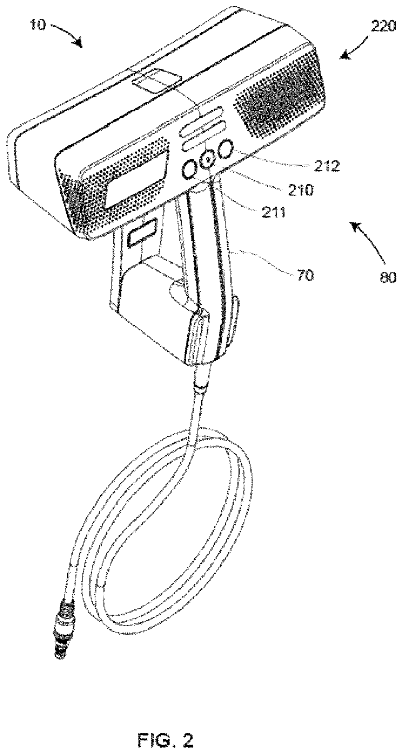

FIG. 1 is a front isometric view of a handheld 3D triangulation scanner 10, also referred to as a handheld 3D imager. In an embodiment, the scanner 10 includes a first infrared (IR) camera 20, a second IR camera 40, a registration camera 30, a projector 50, an Ethernet cable 60 and a handle 70. In an embodiment, the registration camera 30 is a color camera. Ethernet is a family of computer networking technologies standardized under IEEE 802.3. The enclosure 80 includes the outmost enclosing elements of the scanner 10, as explained in more detail herein below. FIG. 2 is a rear perspective view of the scanner 10 further showing an exemplary perforated rear cover 220 and a scan start/stop button 210. In an embodiment, buttons 211, 212 may be programmed to perform functions according to the instructions of a computer program, the computer program either stored internally within the scanner 10 or externally in an external computer. In an embodiment, each of the buttons 210, 211, 212 includes at its periphery a ring illuminated by a light emitting diode (LED).

In an embodiment, the scanner 10 of FIG.1 is the scanner described in commonly owned United States Patent Application Serial No. 16/806,548 filed on March 2, 2020, the contents of which are incorporated by reference herein in its entirety. As will be discussed in more detail herein, the IR cameras 20, 40 and registration camera 30 acquire images simultaneously. The pair of IR images acquired by the cameras 20, 40 and the color image acquired by the registration camera 30 that are acquired simultaneously are referred to as a frame. In an embodiment, the cameras 20, 30, 40 acquire images a predetermined frame rate, such as 20 frames per second for example.

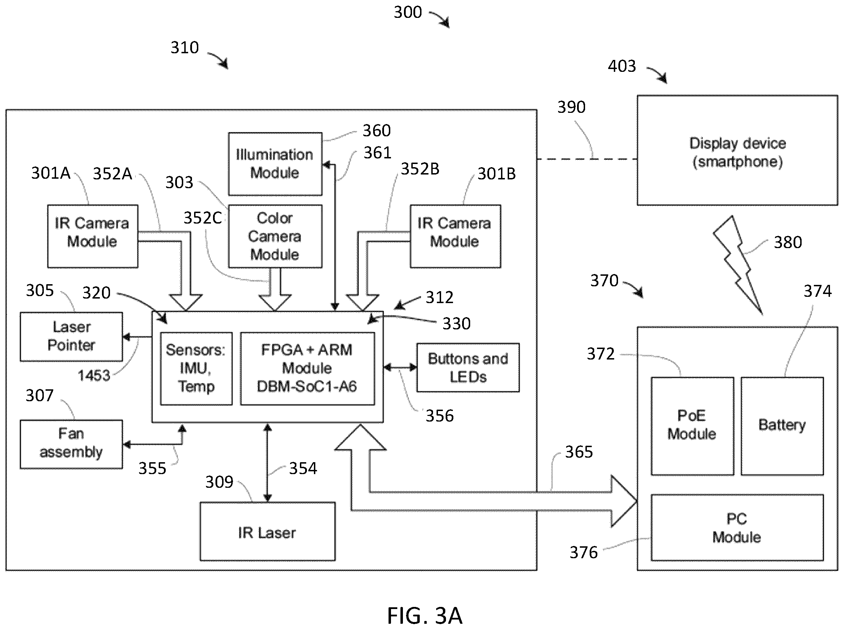

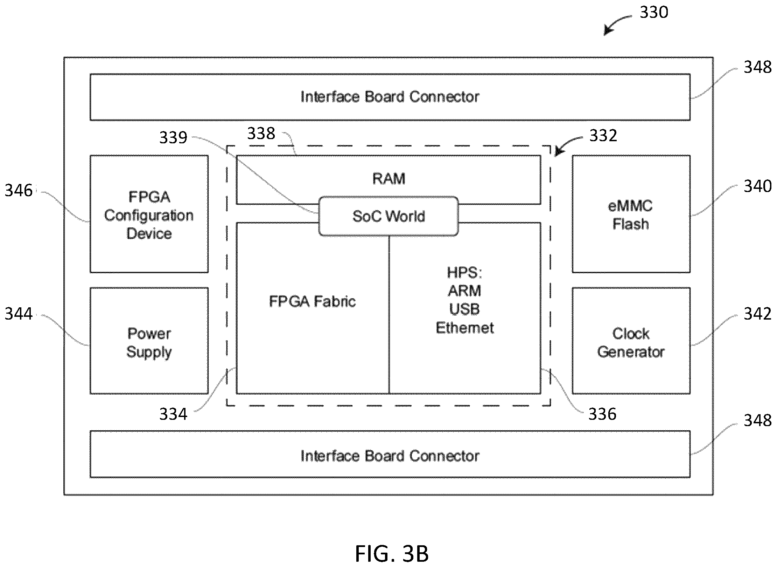

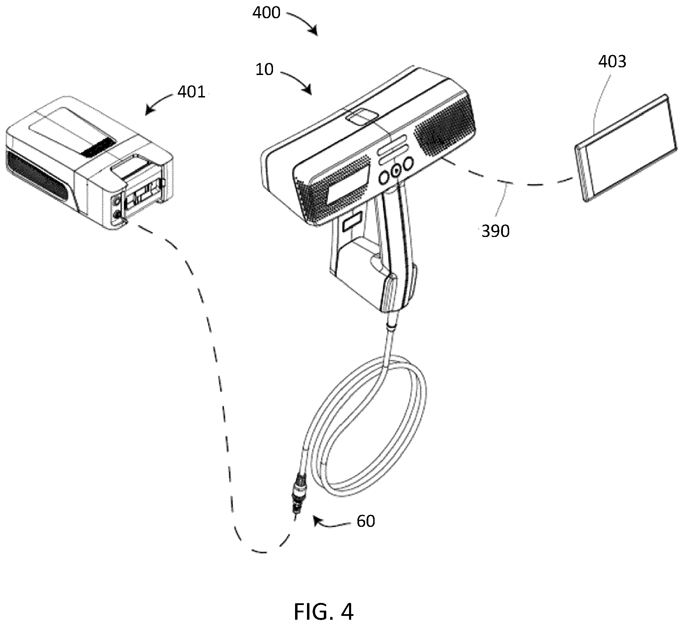

FIG. 3A is a block diagram of system electronics 300 that in an embodiment is included in the scanner system 10. In an embodiment, the assembly 400 includes the electronics 300 having electronics 310 within the handheld scanner 10, electronics 370 within the mobile PC 401 (FIG. 4), electronics within the mobile computing device 403, electronics within other electronic devices such as accessories that attach to an accessory interface (not shown), and electronics such as external computers that cooperate with the scanner system electronics 300. In an embodiment, the electronics 310 includes a circuit baseboard 312 that includes a sensor collection 320 and a computing module 330, which is further shown in FIG. 3B. In an embodiment, the sensor collection 320 includes an IMU and one or more temperature sensors. In an embodiment, the computing module 330 includes a system-on-a-chip (SoC) field programmable gate array (FPGA) 332. In an embodiment, the SoC FPGA 332 is a Cyclone V SoC FPGA that includes dual 800 MHz Cortex A9 cores, which are Advanced RISC Machine (ARM) devices. The Cyclone V SoC FPGA is manufactured by Intel Corporation, with headquarters in Santa Clara, California. FIG. 3B represents the SoC FPGA 332 in block diagram form as including FPGA fabric 334, a Hard Processor System (HPS) 336, and random access memory (RAM) 338 tied together in the SoC 339. In an embodiment, the HPS 336 provides peripheral functions such as Gigabit Ethernet and USB. In an embodiment, the computing module 330 further includes an embedded MultiMedia Card (eMMC) 340 having flash memory, a clock generator 342, a power supply 344, an FPGA configuration device 346, and interface board connectors 348 for electrical communication with the rest of the system.

Signals from the infrared (IR) cameras 301A, 301B and the registration camera 303 are fed from camera boards through cables to the circuit baseboard 312. Image signals 352A, 352B, 352C from the cables are processed by the computing module 330. In an embodiment, the computing module 330 provides a signal 353 that initiates emission of light from the laser pointer 305. A TE control circuit communicates with the TE cooler within the infrared laser 309 through a bidirectional signal line 354. In an embodiment, the TE control circuit is included within the SoC FPGA 332. In another embodiment, the TE control circuit is a separate circuit on the baseboard 312, or may be incorporated into another control circuit, such as the circuit that controls the laser for example. A control line 355 sends a signal to the fan assembly 307 to set the speed of the fans. In an embodiment, the controlled speed is based at least in part on the temperature as measured by temperature sensors within the sensor unit 320. In an embodiment, the baseboard 312 receives and sends signals to buttons 210, 211, 212 and their LEDs through the signal line 356. In an embodiment, the baseboard 312 sends over a line 361 a signal to an illumination module 360 that causes white light from the LEDs to be turned on or off.

In an embodiment, bidirectional communication between the electronics 310 and the electronics 370 is enabled by Ethernet communications link 365. In an embodiment, the Ethernet link is provided by the cable 60. In an embodiment, the cable 60 attaches to the mobile PC 401 through the connector on the bottom of the handle. The Ethernet communications link 365 is further operable to provide or transfer power to the electronics 310 through the user of a custom Power over Ethernet (PoE) module 372 coupled to the battery 374. In an embodiment, the mobile PC 370 further includes a PC module 376, which in an embodiment is an Intel® Next Unit of Computing (NUC) processor. The NUC is manufactured by Intel Corporation, with headquarters in Santa Clara, California. In an embodiment, the mobile PC 370 is configured to be portable, such as by attaching to a belt and carried around the waist or shoulder of an operator.

In an embodiment, shown in FIG. 4, the scanner 10 may be arranged in a first configuration 1700. In this embodiment, a display 403, such as a mobile computing device or cellular phone may be configured to communicate with the scanner 10 or the mobile computing device or mobile PC 401. The communication between the display device 403 and the mobile PC 401 may be by cable or via a wireless medium 380 (e.g. Bluetooth™ or WiFi). In an embodiment, a USB cable connects the mobile phone to the scanner 10, for example, through a USB cable 390 to a compatible USB port on the bottom of the main body of the scanner 10. In an embodiment, using USB tethering, the mobile display 403 is connected to the mobile PC 401 by the Ethernet cable 60 that provides Ethernet link 365.

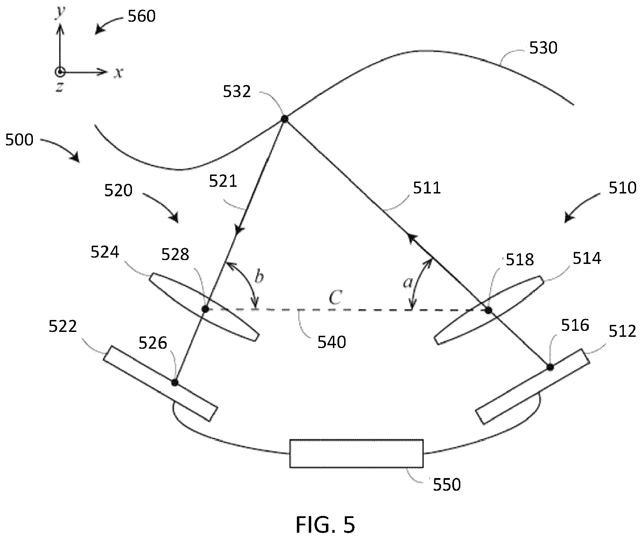

FIG. 5 shows a triangulation scanner (3D imager) 500 that projects a pattern of light over an area on a surface 530. The scanner 500, which has a frame of reference 560, includes a projector 510 and a camera 520. In an embodiment, the projector 510 includes an illuminated projector pattern generator 512, an optional projector lens 514, and a perspective center 518 through which a ray of light 511 emerges. The ray of light 511 emerges from a corrected point 516 having a corrected position on the pattern generator 512. In an embodiment, the point 516 has been corrected to account for aberrations of the projector, including aberrations of the lens 514, in order to cause the ray to pass through the perspective center 518, thereby simplifying triangulation calculations. In an embodiment, the pattern generator 512 includes a light source that sends a beam of light through a diffractive optical element (DOE). For example, the light source might be the infrared laser 309. A beam of light from the infrared laser 309 passes through the DOE, which diffracts the light into a diverging pattern such as a diverging grid of spots. In an embodiment, one of the projected rays of light 511 has an angle corresponding to the angle *a* in FIG. 5. In another embodiment, the pattern generator 512 includes a light source and a digital micromirror device (DMD). In other embodiments, other types of pattern generators 512 are used.

The ray of light 511 intersects the surface 530 in a point 532, which is reflected (scattered) off the surface and sent through the camera lens 524 to create a clear image of the pattern on the surface 530 of a photosensitive array 522. The light from the point 532 passes in a ray 521 through the camera perspective center 528 to form an image spot at the corrected point 526. The position of the image spot is mathematically adjusted to correct for aberrations of the camera lens. A correspondence is obtained between the point 526 on the photosensitive array 522 and the point 516 on the illuminated projector pattern generator 512. As explained herein below, the correspondence may be obtained by using a coded or an uncoded pattern of projected light. Once the correspondence is known, the angles *a* and *b* in FIG. 5 may be determined. The baseline 540, which is a line segment drawn between the perspective centers 518 and 528, has a length *C.* Knowing the angles *a, b* and the length *C,* all the angles and side lengths of the triangle 528-532-518 may be determined. Digital image information is transmitted to a processor 550, which determines 3D coordinates of the surface 530. The processor 550 may also instruct the illuminated pattern generator 512 to generate an appropriate pattern.

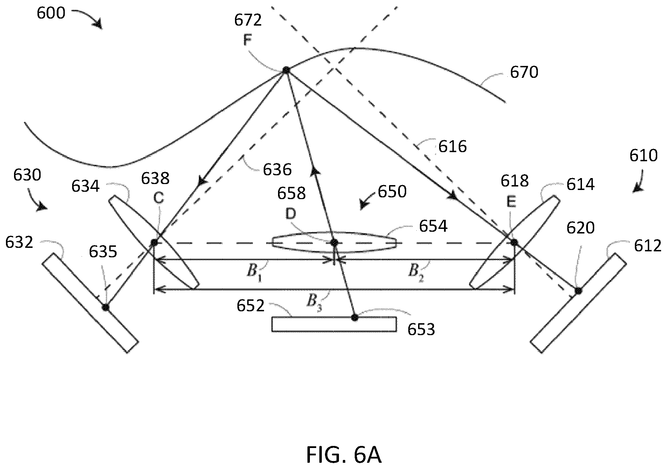

FIG. 6A shows a structured light triangulation scanner 600 having a projector 650, a first camera 610, and a second camera 630. The projector 650 creates a pattern of light on a pattern generator 652, which it projects from a corrected point 653 of the pattern through a perspective center 658 (point D) of the optional lens 654 onto an object surface 670 at a point 672 (point F). In an embodiment, the pattern generator is a DOE that projects a pattern based on principles of diffractive optics. In other embodiments, other types of pattern generators are used. The point 672 is imaged by the first camera 610 by receiving a ray of light from the point 672 through a perspective center 618 (point E) of a lens 614 onto the surface of a photosensitive array 612 of the camera 610 (having an optical axis 616) as a corrected point 620. The point 620 is corrected in the read-out data by applying a correction factor to remove the effects of lens aberrations. The point 672 is likewise imaged by the second camera 630 by receiving a ray of light from the point 672 through a perspective center 638 (point C) of the lens 634 onto the surface of a photosensitive array 632 of the second camera 630 (having an optical axis 636) as a corrected point 635. It should be understood that any reference to a lens in this document is understood to mean any possible combination of lens elements and apertures.

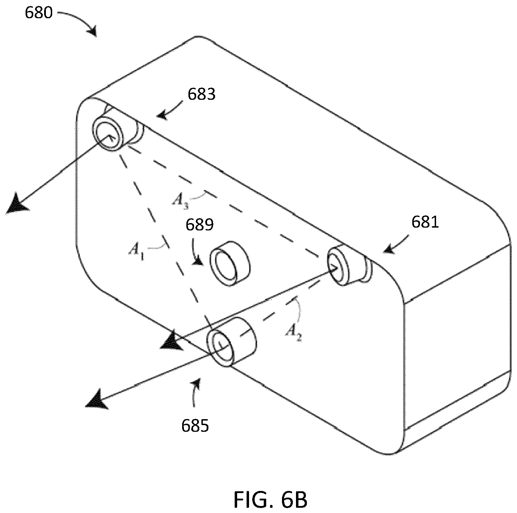

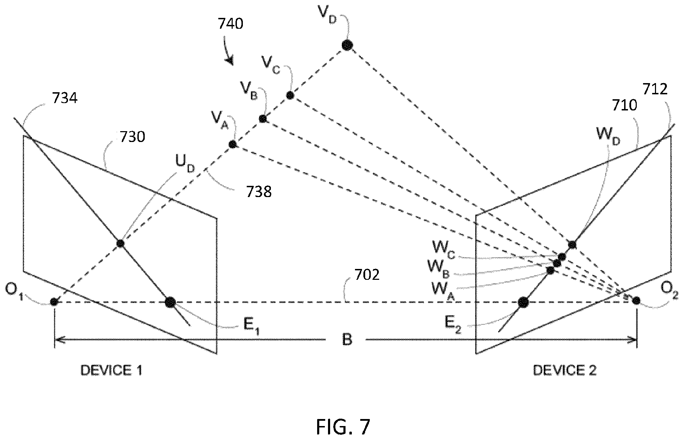

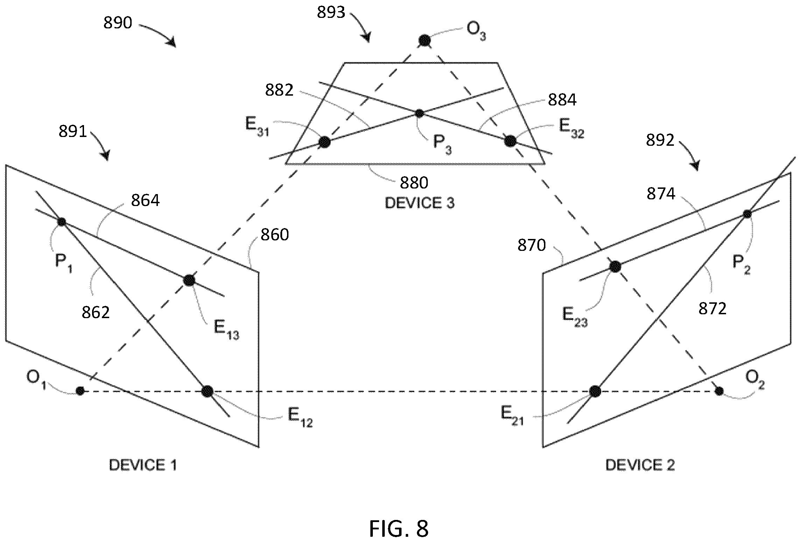

FIG. 6B shows 3D imager 680 having two cameras 681, 683 and a projector 685 arranged in a triangle *A*₁*-A*₂*-A*₃*.* In an embodiment, the 3D imager 680 of FIG. 6B further includes a camera 689 that may be used to provide color (texture) information for incorporation into the 3D image. In addition, the camera 689 may be used to register multiple 3D images through the use of videogrammetry. As noted herein, the collection of data acquired by the cameras 681, 683, 689 are referred to as a frame. The images from each frame are used to determine three-dimensional coordinates of points on the surface(s) being scanned. This triangular arrangement provides additional information beyond that available for two cameras and a projector arranged in a straight line as illustrated in FIG. 6A. The additional information may be understood in reference to FIG. 7, which explains the concept of epipolar constraints, and FIG. 8, which explains how epipolar constraints are advantageously applied to the triangular arrangement of the 3D imager 680. In an embodiment, the elements 681, 683, 685, 689 in FIG. 6B correspond to the elements 40, 20, 50, 30 in FIG. 1.

In FIG. 7, a 3D triangulation instrument 740 includes a device 1 and a device 2 on the left and right sides, respectively. Device 1 and device 2 may be two cameras or device 1 and device 2 may be one camera and one projector. Each of the two devices, whether a camera or a projector, has a perspective center, O₁ and O₂, and a reference plane, 730 or 710. The perspective centers are separated by a baseline distance B, which is the length of the line 702 between O₁ and O₂. The perspective centers O₁, O₂ are points through which rays of light may be considered to travel, either to or from a point on an object. These rays of light either emerge from an illuminated projector pattern or impinge on a photosensitive array.

In FIG. 7, a device 1 has a perspective center O₁ and a reference plane 2130, where the reference plane 730 is, for the purpose of analysis, equivalent to an image plane of the object point O₁ 730. In other words, the reference plane 730 is a projection of the image plane about the perspective center O₁. A device 2 has a perspective center O₂ and a reference plane 710. A line 702 drawn between the perspective centers O₁ and O₂ crosses the planes 730 and 710 at the epipole points E₁, E₂, respectively. Consider a point U_{D} on the plane 730. If device 1 is a camera, an object point that produces the point U_{D} on the reference plane 730 (which is equivalent to a corresponding point on the image) must lie on the line 738. The object point might be, for example, one of the points V_{A}, V_{B}, V_{C}, or V_{D}. These four object points correspond to the points W_{A}, W_{B}, W_{C}, W_{D}, respectively, on the reference plane 710 of device 2. This is true whether device 2 is a camera or a projector. It is also true that the four points lie on a straight line 712 in the plane 710. This line, which is the line of intersection of the reference plane 710 with the plane of O₁-O₂-U_{D}, is referred to as the epipolar line 712. It follows that any epipolar line on the reference plane 710 passes through the epipole E₂. Just as there is an epipolar line on the reference plane 710 of device 2 for any point U_{D} on the reference plane of device 1, there is also an epipolar line 734 on the reference plane 730 of device 1 for any point on the reference plane 710 of device 2.

FIG. 8 illustrates the epipolar relationships for a 3D imager 890 corresponding to 3D imager 880 of FIG. 20B in which two cameras and one projector are arranged in a triangular pattern. In general, the device 1, device 2, and device 3 may be any combination of cameras and projectors as long as at least one of the devices is a camera. Each of the three devices 891, 892, 893 has a perspective center O₁, O₂, O₃, respectively, and a reference plane 860, 870, and 880, respectively. Each pair of devices has a pair of epipoles. Device 1 and device 2 have epipoles E₁₂, E₂₁ on the planes 860, 870, respectively. Device 1 and device 3 have epipoles E₁₃, E₃₁, respectively on the planes 860, 880, respectively. Device 2 and device 3 have epipoles E₂₃, E₃₂ on the planes 870, 880, respectively. In other words, each reference plane includes two epipoles. The reference plane for device 1 includes epipoles E₁₂ and E₁₃. The reference plane for device 2 includes epipoles E₂₁ and E₂₃. The reference plane for device 3 includes epipoles E₃₁ and E₃₂.

Consider the situation of FIG. 8 in which device 3 is a projector, device 1 is a first camera, and device 2 is a second camera. Suppose that a projection point P₃, a first image point P₁, and a second image point P₂ are obtained in a measurement. These results can be checked for consistency in the following way.

To check the consistency of the image point P₁, intersect the plane P₃-E₃₁-E₁₃ with the reference plane 860 to obtain the epipolar line 864. Intersect the plane P₂-E₂₁-E₁₂ to obtain the epipolar line 862. If the image point P₁ has been determined consistently, the observed image point P₁ will lie on the intersection of the calculated epipolar lines 862 and 864.

To check the consistency of the image point P₂, intersect the plane P₃-E₃₂-E₂₃ with the reference plane 870 to obtain the epipolar line 874. Intersect the plane P₁-E₁₂-E₂₁ to obtain the epipolar line 872. If the image point P₂ has been determined consistently, the observed image point P₂ will lie on the intersection of the calculated epipolar line 872 and epipolar line 2274.

To check the consistency of the projection point P₃, intersect the plane P₂-E₂₃-E₃₂ with the reference plane 880 to obtain the epipolar line 884. Intersect the plane P₁-E₁₃-E₃₁ to obtain the epipolar line 882. If the projection point P₃ has been determined consistently, the projection point P₃ will lie on the intersection of the calculated epipolar lines 882 and 884.

The redundancy of information provided by using a 3D imager having three devices (such as two cameras and one projector) enables a correspondence among projected points to be established even without analyzing the details of the captured images and projected pattern features. Suppose, for example, that the three devices include two cameras and one projector. Then a correspondence among projected and imaged points may be directly determined based on the mathematical constraints of the epipolar geometry. This may be seen in FIG. 8 by noting that a known position of an illuminated point on one of the reference planes 860, 870, 880 automatically provides the information needed to determine the location of that point on the other two reference planes. Furthermore, once a correspondence among points has been determined on each of the three reference planes 860, 870, 880, a triangulation calculation may be performed using only two of the three devices of FIG. 8. A description of such a triangulation calculation is discussed in relation to FIG. 7.

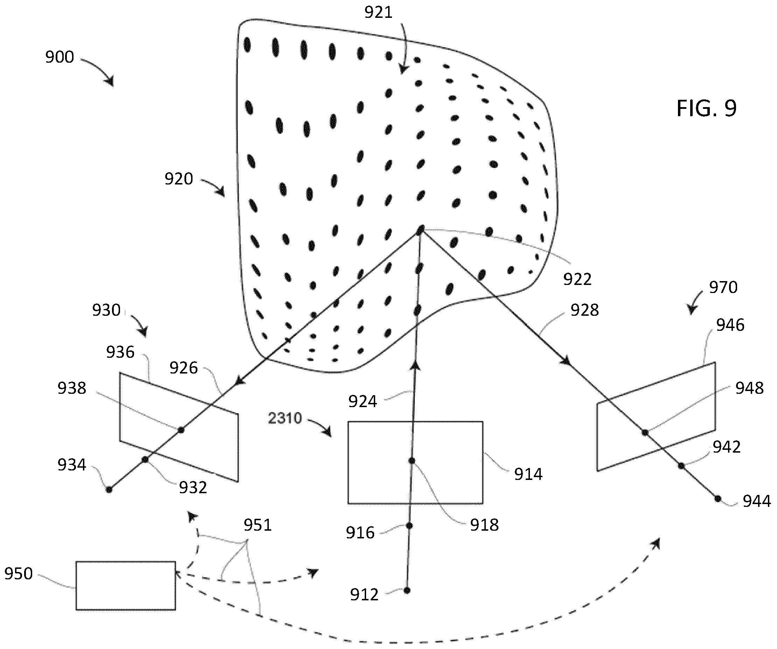

By establishing correspondence based on epipolar constraints, it is possible to determine 3D coordinates of an object surface by projecting uncoded spots of light. An example of projection of uncoded spots is illustrated in FIG. 9. In an embodiment, a projector 2310 projects a collection of identical spots of light 921 on an object 920. In the example shown, the surface of the object 920 is curved in an irregular manner causing an irregular spacing of the projected spots on the surface. One of the projected points is the point 922, projected from a projector source element 912 and passing through the perspective center 916 as a ray of light 924 forms a point 918 on the reference plane 914.

The point or spot of light 922 on the object 920 is projected as a ray of light 926 through the perspective center 932 of a first camera 930, resulting in a point 934 on the image sensor of the camera 930. The corresponding point 938 is located on the reference plane 936. Likewise, the point or spot of light 922 is projected as a ray of light 928 through the perspective center 942 of a second camera 970, resulting in a point 944 on the image sensor of the camera 940. The corresponding point 948 is located on the reference plane 946. In an embodiment, a processor 950 is in communication 951 with the projector 910, first camera 930, and second camera 940. The processor determines a correspondence among points on the projector 910, first camera 930, and second camera 940. In an embodiment, the processor 950 performs a triangulation calculation to determine the 3D coordinates of the point 922 on the object 920. As discussed herein, the images that are simultaneously acquired by the cameras 930, 940 (and if available any registration camera or color camera images) are referred to as a frame. Also, the 3D coordinates determined from the images of a frame (e.g. point 922) are associated with this frame. As will be discussed in more details herein, this association of the 3D coordinates with a frame allows the correction of certain errors (e.g. accumulated errors, sometimes referred to as drift) in the 3D coordinates in a point cloud generated by a scan.

An advantage of a scanner 900 having three device elements, either two cameras and one projector or one camera and two projectors, is that correspondence may be determined among projected points without matching projected feature characteristics. In other words, correspondence can be established among spots on the reference planes 936, 914, and 946 even without matching particular characteristics of the spots. The use of the three devices 910, 930, 940 also has the advantage of enabling identifying or correcting errors in compensation parameters by noting or determining inconsistencies in results obtained from triangulation calculations, for example, between two cameras, between the first camera and the projector, and between the second camera and the projector.

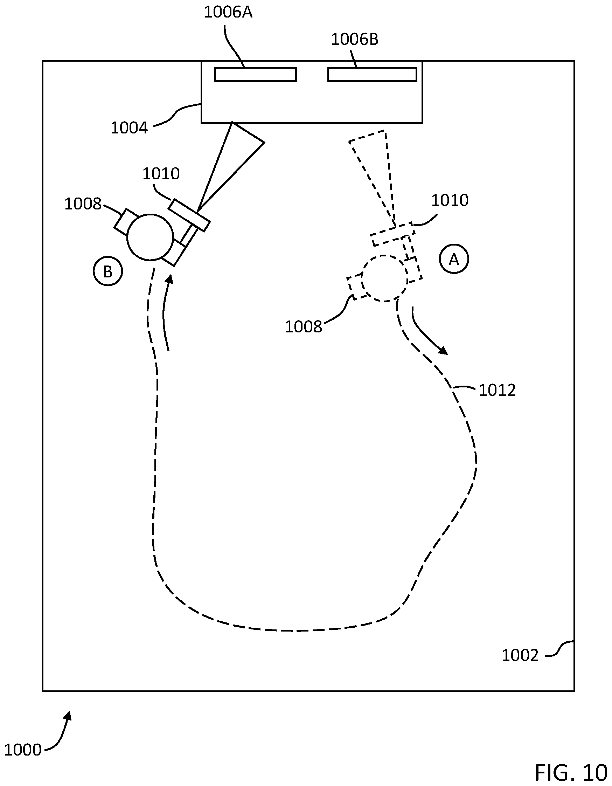

Referring now to FIG. 10 an embodiment of scan operation 1000 is shown within an environment 1002. The environment 1002 includes objects, such as a table 1004 having a pair of computer monitors 1006A, 1006B. The operator 1008 operates a scanner 1010 at a starting position A with the scanner 1010 scanning the table 1004 and monitor 1006B. The operator then proceeds to scan environment 1002 moving along the path 1012. The scan ends at point B with the field of view of the scanner 1010 at point B overlapping the field of view of the scanner 1010 at point A. As a result, the table 1004 and monitor 1006B are scanned twice at different times. A common issue with scanners that are moved during the course of operation is the accumulation of errors between successive frames. While the error between successive frames is small, over the course of operating the scanner over a path the cumulative effect of this could result in a positional error of several centimeters by the end of the scanning operation. This cumulative error is sometimes referred to as drift.

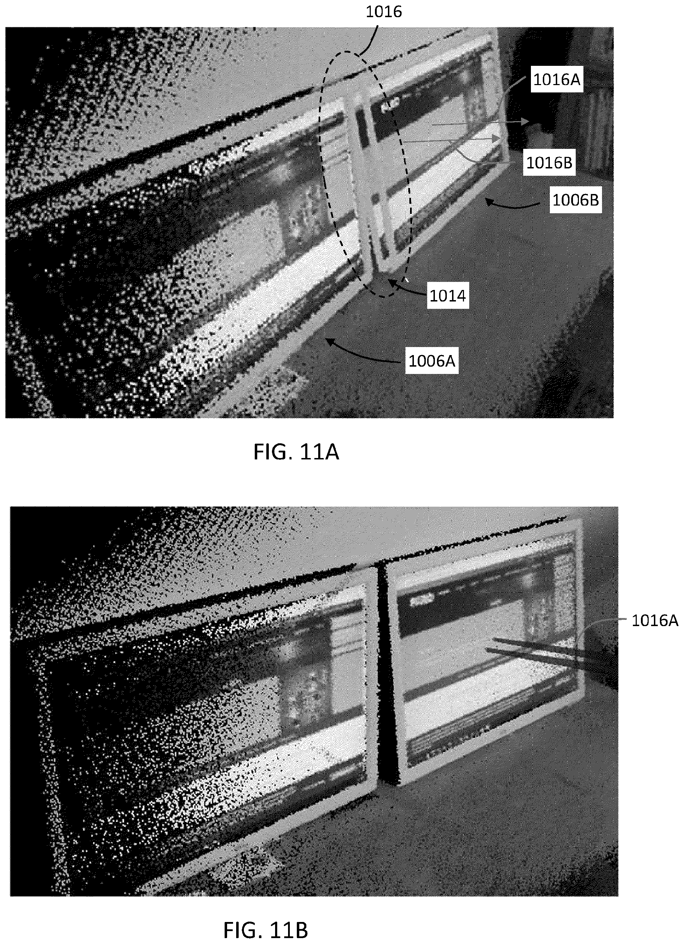

This error may become apparent on surfaces that are scanned multiple times, such as the monitor 1006B in the example of FIG. 10. The image of FIG. 11A is a point cloud of 3D coordinates acquired by the scanner 1010. Due to an accumulation error in the scan data between point A and point B (FIG. 10), the monitor 1006B is shown with offset surfaces 1014 in the area highlighted by circle 1016. It should be readily apparent that within the point cloud of FIG. 11A, that there are two monitors 1006B within the point cloud that are offset from each other.

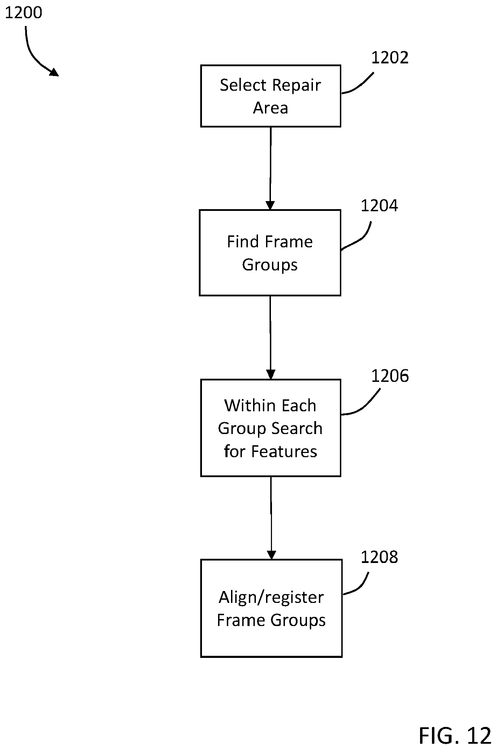

Referring now to FIG. 12 with continuing reference to FIGS. 10-11B, a method 1200 of repairing a point cloud is shown for correcting cumulative errors or drift. The method 300 begins in block 1202 where an area of the point cloud is selected for repair or correction. In the embodiment of FIG. 11A, the area may be the area where the offset surfaces 1014 is located. In an embodiment, the area is identified by the user such as through visual inspection of the point cloud for example. The user may then manually select the area, such as by using a user interface (e.g. a display screen and an input tool such as a computer mouse) to draw a polygon or other shape around the general area where the repair is desired. In another embodiment, the repair area is identified by the processing system by comparing the times when frames that include points within the same general space of that area are acquired (e.g. sets of frames that were acquired at the beginning and end of the scan). In an embodiment, the identified areas would be indicated to the operator for further visual inspection. In an embodiment, the processing system may further analyze the identified areas and look for features, such as parallel planes within a predetermined distance, and automatically proceed with the repair.

In still further embodiments, the selection of the region is based on metadata acquired during the acquisition of the point cloud. In still further embodiments, the metadata includes at least one of: a number of features in the point cloud; a number of targets in the point cloud; a quality attribute of the targets; a number of 3D points in the point cloud; a tracking stability parameter; and parameters related to the movement of a scanning device during the acquisition of the point cloud.

A quality attribute of the targets includes but is not limited to a parameter known as the age of the targets. The age of the targets is the number of images or frames that the target has been detected. It should be appreciated that the more images or frames that a target is located increases the quality of the target for tracking purposes.

A tracking stability parameter may be any parameter that provides a quality indicator. In an embodiment the tracking stability parameter may be one of: a speed of movement of the scanning device, an age of the targets, a number of targets, or a blurriness of the images (e.g. how well the feature can be resolved).

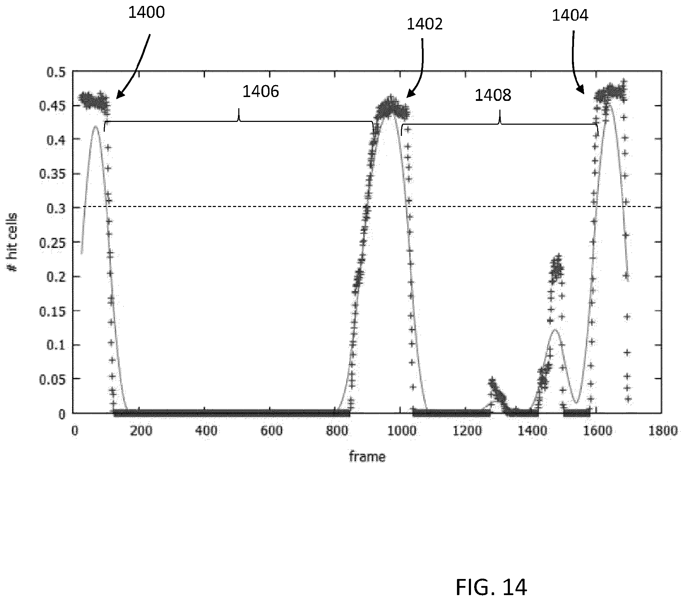

The method then proceeds to block 1204 where the frame groups associated with the selected area are identified. In an embodiment, the processing system iterates through all of the frames and an overlap is detected with the selected area. Each frame with an overlap larger than a threshold is defined as being part of a group or a chunk. In the embodiment of FIG. 14, there would be three groups 1400, 1402, 1404. It should be appreciated that the number of identified group may include more or less groups than is illustrated in FIG. 14. In an embodiment, there are at least two frame groups with one feature in each group.

The method 1200 then proceeds to block 1206 where within each group 1400, 1402, 1404 a search is performed by the processing system for features or objects, such as planes, edges, cylinders, spheres, and markers for example. In an embodiment, the features may be defined by texture, color or patterns (e.g. a checkerboard, QR code, target, or marker patterns). In an embodiment, texture can include a color of the surface, adjacent colors on surface, a machine readable symbol, or a light pattern projected onto a surface. In an embodiment the features or objects may be a geometric primitive, such as a cube, a cylinder, a sphere, a cone, a pyramid, or a torus for example. In an embodiment, the features or objects may be at least one of a geometric primitive, at least one surface of a geometric primitive, a well-defined 3D geometry, a plane or a plurality of planes. As used herein, a well-defined 3D geometry is a geometry that can be used for cloud to cloud registration. In an embodiment, the well-defined 3D geometry provides three-dimensional information from a plurality of directions. In an embodiment, a plane can define a well-defined geometry when the cloud to cloud registration is limited to three degrees of freedom alignment.

In an embodiment, when the features or objects are defined by a plurality of planes, the plurality of planes may include planes that are adjacent and are adjoined, planes that are not adjoined but form a virtual intersection in 3D space. In some embodiments, the virtual intersection forms an anchor point in 3D space.

After the features are found in each group, a correspondence search is performed by the processing system. Based on a combination of geometrical constraints (such as relative position and orientation of multiple features within one group for example), feature characteristics/attributes (such as marker IDs/identifiers for example) and predetermined thresholds, correspondences between features in different groups are established. In an embodiment, the attribute may be a shape type, where the shape type may be a plane, a plurality of connected planes, a sphere, a cylinder, or a well-defined 3D geometry. An example for a predetermined threshold is the distance between two parallel plane features. The system analyzes the features to determine if the features are the same feature in real-space (i.e. the correspond to each other) that has been offset due to accumulated error. In an embodiment, the features are identified by the processing system and the operator is alerted for confirmation on whether the features are the same features in real-space. In another embodiment, the processing system automatically evaluates the features by comparing at least one parameter of the identified two adjacent features. When the at least one parameter matches within a predetermined threshold the features are identified as being the same feature. In an embodiment, the parameter may be a surface normal 1016A, 1016B (FIG. 11A) for example, such as at the geometric center or the center of gravity of the plane. In the embodiment of FIG. 11A, the surface normals 1016A, 1016B are in the same direction and the surfaces are within a predetermined distance threshold of each other. As a result, the points from the later (in time) frame are identified for adjustment or repair. Visually this can be seen in FIG. 11A as appearing like two overlapping monitors.

It should be appreciated that while embodiments herein describe the determination of correspondence between features with respect to the threshold evaluation, this is for example purposes and the claims should not be so limited. For example, in other embodiments, other threshold evaluations may be used based on other parameters, such as the type, size, position, orientation, or a combination thereof. In other embodiments, the feature may be a marker/target having an identification and threshold may be the distance between the two markers. In still other embodiments other types of evaluations may be performed to determine the correspondence of features, including a combination of the factors described herein.

It should be appreciated that using the feature parameter helps identify features that are within the distance threshold in real-space from being misidentified for repair. For example, a top and bottom surface of a table may be within the distance threshold, however, their surface normal would be in opposite directions. Therefore, the processing system will not mis-identify (false positive) the surfaces for repair.

With the features for correction identified, the method 1200 then proceeds to block 1208 where the frames containing the points that were identified for repair or correction are realigned. In an embodiment, the alignment is performed with at least one degree of freedom of the identified objects/features. In another embodiment, the alignment is performed with between two degrees of freedom to six degrees of freedom of the identified objects/features. This results in the points from the earlier frames and the later frames being substantially aligned as is shown in FIG. 11B. It should be appreciated that once the realignment is performed, the vectors or surface normal 1016A, 1016B will be parallel (when the aligned features are surfaces such as planes for example). In an embodiment where the surface normal is centered on the points of the feature/plane (as is shown in FIG. 11A, FIG. 11B), the vectors 1016A, 1016B will be parallel and originate from the same surface, but not necessarily coaxial since the distribution of 3D points on the feature may be different in each group. In an embodiment, the alignment is based on an object quality parameter associated with at least one of the identified objects/features

Once the features are realigned, in an embodiment, the remaining frames in the scan are realigned based at least in part on their previous alignment (e.g. determined during scanning and post processing) with new constraints added as a result of the realignment of the features in block 1208. In an embodiment, the initial alignment and the realignment may be performed by a bundler algorithm (sometimes referred to as a bundle adjustment) that reconstructs the 3D coordinates and uses constraints, such as natural features within the environment, artificial targets/markers, or the features discussed above for example. The bundler uses a method for solving large complicated optimization problems, such as non-linear least squares problems with bounds constraints. In an embodiment, the bundler uses the Ceres Solver produced by Google, Inc to solve the system of equations.

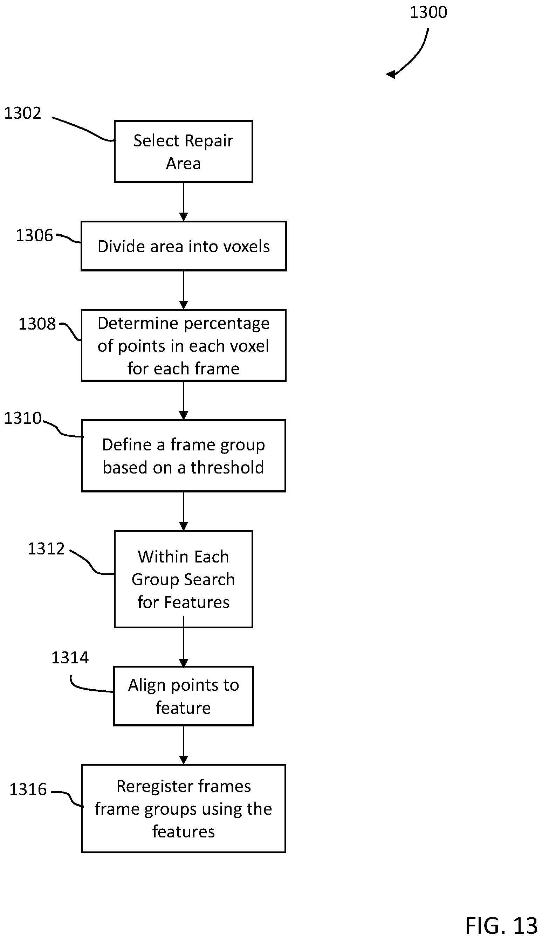

Referring now to FIG. 13, an embodiment of another method 1300 is shown for repairing or correcting the alignment of points in a point cloud. In this embodiment, the method 1300 starts in block 1302 where the area of the point cloud is selected for repair. This step may be the same as block 1202 of method 1200. In this embodiment, to identify the frames, the selected area is divided into voxels in block 1306. The voxels may be of a fixed size or a user defined size for example.

The method then proceeds to block 1308 where a count is made for each frame on the number of voxels that contain one or more scan points of this frame . In block 1308, for each frame a percentage of the voxels within the selected area is determined. The method 1300 then proceeds to block 1310 where a frame having a count larger than a threshold (e.g. percentage) is placed in a frame group or chunk. FIG. 14 illustrates a counting of the number of cells or voxels (Y-axis) for each frame (X-axis). Frames that have a count above a predetermined threshold, such as 30% for example, are grouped together. In FIG. 14, there are three frame groups 1400, 1402, 1404. In an alternative embodiment, only the center frame of a frame group is determined using the described threshold criterion. The other frames belonging to a frame group are then determined based other criteria such as the number of common tracking features with the center frame.

The method 1300 then proceeds to block 1312 where each identified frame group is searched for features (e.g. planes, edges, cylinders, spheres, colors, patterns) that are within a predetermined distance threshold and have a parameter that is aligned (e.g. surface normal arranged in substantially the same direction). As discussed herein above with respect to FIG. 12, the threshold evaluation is one example of a method for determining the correspondence between features of the scan. In other embodiments, the determination of the correspondence of features may be based on one or more of the type, size, position, and orientation of the features.

In an embodiment, block 1312 may be the same as block 1206 of method 1200. The method 1300 then proceeds to block 1314 where the frames are realigned to improve the accuracy of the point cloud. In an embodiment, the identified features, such as two parallel offset planes having parallel surface normal for example, are aligned to move the later acquired frame to be coincident (e.g. matched) with the plane from the earlier acquired frame. As a result, the points of the two planes are aligned on the same plane, resulting in a new alignment of the corresponding frames Using the aligned features as additional constraints, the frames between the frame groups, such as the frames 1406, 1408 are then re-registered to each other in block 1316. In an embodiment, the re-registration may use in addition all features that have been used during the scanning and post-processing procedure of the scan. These features can be two-dimensional natural features acquired by the registration camera 30. These natural features are combined with 3D points from a single frame 3D mesh if the mesh satisfies defined criteria on the size and orientation of the mesh triangles. The combination of 3D points and 2D points is used as input for the alignment of each single frame. In another embodiment, the re-registration uses artificial markers detected during the scanning or post-processing procedure. In even another embodiment, the re-registration uses geometrical features such as planes detected during the scanning or post-processing procedure.

It should be appreciated that in an embodiment, the features identified for realignment may be used in the alignment of subsequent scans (e.g. separate scans performed at a different time) to the initial scan. In an embodiment, the feature may be identified in a data structure (e.g. metadata) and include a unique identifier, a type, position, or orientation of the feature for example. In subsequent scans, the feature identification may be used to determine a correspondence between the feature from the previous scan with the same feature in the scan data of the subsequent scan(s). This correspondence of the features may then be used as a constraint in the alignment of the subsequent scan data to the previous scan data.

Technical effects and benefits of the disclosed embodiments include, but are not limited to, increasing scan quality and a visual appearance of scans acquired by the 3D coordinate measurement device.

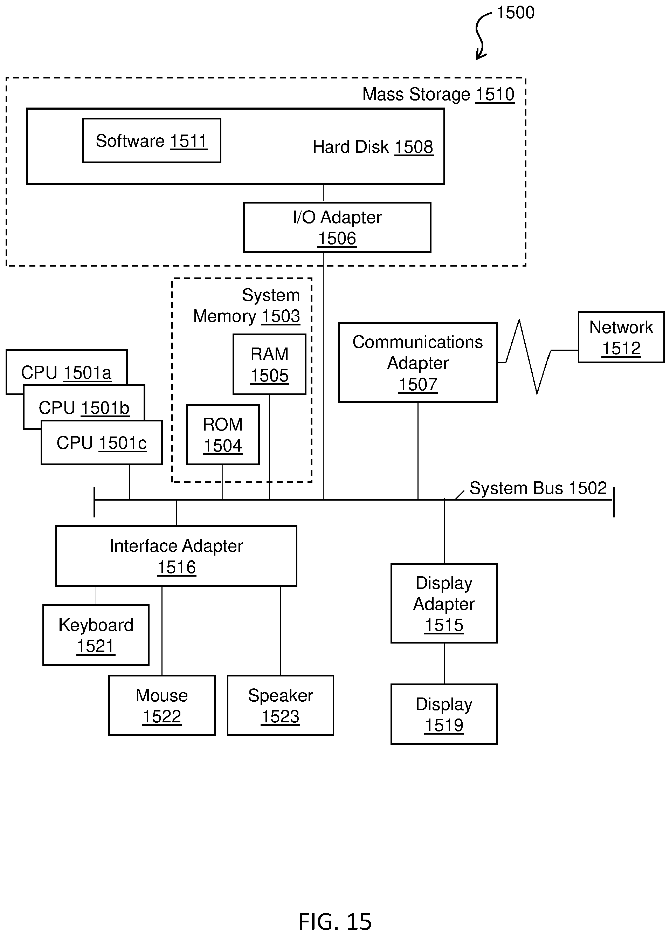

Turning now to FIG. 15, a processing system or computer system 1500 is generally shown in accordance with an embodiment. The computer system 1500 can be an electronic, computer framework comprising and/or employing any number and combination of computing devices and networks utilizing various communication technologies, as described herein. The computer system 1500 can be easily scalable, extensible, and modular, with the ability to change to different services or reconfigure some features independently of others. The computer system 1500 may be, for example, a server, desktop computer, laptop computer, tablet computer, or smartphone. In some examples, computer system 1500 may be a cloud computing node. Computer system 1500 may be described in the general context of computer system executable instructions, such as program modules, being executed by a computer system. Generally, program modules may include routines, programs, objects, components, logic, data structures, and so on that perform particular tasks or implement particular abstract data types. Computer system 1500 may be practiced in distributed cloud computing environments where tasks are performed by remote processing devices that are linked through a communications network. In a distributed cloud computing environment, program modules may be located in both local and remote computer system storage media including memory storage devices.

As shown in FIG. 15, the computer system 1500 has one or more central processing units (CPU(s)) 1501a, 1501b, 1501c, etc. (collectively or generically referred to as processor(s) 1501). The processors 1501a, 1501b, 1501c can be a single-core processor, multi-core processor, computing cluster, or any number of other configurations. The processors 1501a, 1501b, 1501c, also referred to as processing circuits, are coupled via a system bus 1502 to a system memory 1503 and various other components. The system memory 1503 can include a read only memory (ROM) 1504 and a random access memory (RAM) 1505. The ROM 1504 is coupled to the system bus 1502 and may include a basic input/output system (BIOS), which controls certain basic functions of the computer system 1500. The RAM is read-write memory coupled to the system bus 1502 for use by the processors 1501a, 1501b, 1501c. The system memory 1503 provides temporary memory space for operations of said instructions during operation. The system memory 1503 can include random access memory (RAM), read only memory, flash memory, or any other suitable memory systems.

The computer system 1500 comprises an input/output (I/O) adapter 1506 and a communications adapter 1507 coupled to the system bus 1502. The I/O adapter 1506 may be a small computer system interface (SCSI) adapter that communicates with a hard disk 1508 and/or any other similar component. The I/O adapter 1506 and the hard disk 1508 are collectively referred to herein as a mass storage 1510.

Software 1511 for execution on the computer system 1500 may be stored in the mass storage 1510. The mass storage 1510 is an example of a tangible storage medium readable by the processors 1501, where the software 1511 is stored as instructions for execution by the processors 1501 to cause the computer system 1500 to operate, such as is described herein below with respect to the various Figures. Examples of computer program product and the execution of such instruction is discussed herein in more detail. The communications adapter 1507 interconnects the system bus 1502 with a network 1512, which may be an outside network, enabling the computer system 1500 to communicate with other such systems. In one embodiment, a portion of the system memory 1503 and the mass storage 1510 collectively store an operating system, which may be any appropriate operating system, such as the z/OS or AIX operating system from IBM Corporation, to coordinate the functions of the various components shown in FIG. 15.

Additional input/output devices are shown as connected to the system bus 1502 via a display adapter 1515 and an interface adapter 1516 and. In one embodiment, the adapters 1506, 1507, 1515, and 1516 may be connected to one or more I/O buses that are connected to the system bus 1502 via an intermediate bus bridge (not shown). A display 1519 (e.g., a screen or a display monitor) is connected to the system bus 1502 by a display adapter 1515, which may include a graphics controller to improve the performance of graphics intensive applications and a video controller. A keyboard 1521, a mouse 1522, a speaker 1523, etc. can be interconnected to the system bus 1502 via the interface adapter 1516, which may include, for example, a Super I/O chip integrating multiple device adapters into a single integrated circuit. Suitable I/O buses for connecting peripheral devices such as hard disk controllers, network adapters, and graphics adapters typically include common protocols, such as the Peripheral Component Interconnect (PCI). Thus, as configured in FIG. 15, the computer system 1500 includes processing capability in the form of the processors 1501, and, storage capability including the system memory 1503 and the mass storage 1510, input means such as the keyboard 1521 and the mouse 1522, and output capability including the speaker 1523 and the display 1519.

In some embodiments, the communications adapter 1507 can transmit data using any suitable interface or protocol, such as the internet small computer system interface, among others. The network 1512 may be a cellular network, a radio network, a wide area network (WAN), a local area network (LAN), or the Internet, among others. An external computing device may connect to the computer system 1500 through the network 1512. In some examples, an external computing device may be an external webserver or a cloud computing node.

It is to be understood that the block diagram of FIG. 15 is not intended to indicate that the computer system 1500 is to include all of the components shown in FIG. 15. Rather, the computer system 1500 can include any appropriate fewer or additional components not illustrated in FIG. 15 (e.g., additional memory components, embedded controllers, modules, additional network interfaces, etc.). Further, the embodiments described herein with respect to computer system 1500 may be implemented with any appropriate logic, wherein the logic, as referred to herein, can include any suitable hardware (e.g., a processor, an embedded controller, or an application specific integrated circuit, among others), software (e.g., an application, among others), firmware, or any suitable combination of hardware, software, and firmware, in various embodiments.

In an embodiment, a method for correcting a point cloud is provided. The method comprises: selecting region within the point cloud; identifying at least two objects within the selected region; realigning the at least two objects; and realigning at least part of the point cloud based at least in part on the at least two obj ects

In an embodiment, the method includes selecting the region based at least in part on the meta-data acquired during the scanning process. In an embodiment, the meta-data comprises at least one of the following: the number of features; the number of targets; the age of targets; the number of 3D points; the tracking stability; and data on movement of device (linear and angular, velocity or acceleration).

In an embodiment, the method includes searching through the point cloud to identify points within the selected region (before identifying features).

In an embodiment, the at least two objects consist of one or more of the following: a plane or compound of planes; a sphere or other 3D object; a cylinder; a well-defined texture on a plane or on another defined geometry (e.g. coded marker, checkerboard, QR code, projected light pattern); or a well-defined 3D geometry (to be used for cloud to cloud alignment of the features).

In an embodiment, the method includes the at least two objects belong to at least two separable groups of scan points.

In an embodiment, the method includes the at least two separable groups belonging to different capturing time intervals.

In an embodiment, the method includes the point cloud consisting of frames, each frame consisting of at least one point; the region is divided into voxels; each scan point in the region is assigned to one voxel; for each frame, the percentage of points that are in at least on voxel are counted; and separable groups consist of a number of frames, frames being assigned to groups based at least in part on the percentage of points.

In an embodiment, the method includes the at least two separable groups of scan points being identified based on at least one of: a number of features; a number of targets; an age of the targets; a number of 3D points; a tracking stability; and data on movement of device (linear and angular, velocity or acceleration).

In an embodiment, the method includes identifying at least one correspondence between the at least two objects.

In an embodiment, the method includes the at least one correspondence being identified based at least in part on defined IDs of the at least two objects.

In an embodiment, the at least one correspondence is identified based at least in part on the types of the at least two objects.

In an embodiment, the at least one correspondence is identified based at least in part on at least one of the position coordinates of the at least two objects within the point cloud.

In an embodiment, the method includes position coordinates of the at least two objects being compared using a distance threshold.

In an embodiment, the at least one correspondence is identified based at least in part on at least one of the angular coordinates of the at least two objects within the point cloud.

In an embodiment, the method includes angular coordinates of the at least two objects are compared using an angular distance threshold.

In an embodiment, the method includes the at least one correspondence is identified based at least in part on a consistency criterion (e.g. two planes penetrating one another).

In an embodiment, the method includes the at least one correspondence is identified based at least in part on at least one feature in the surrounding of at least one of the objects.

In an embodiment, the method includes the alignment of the at least two objects refers to an alignment in one, two, three, four, five or six degrees of freedom.

In an embodiment, the method includes the alignment of the at least part of the point cloud refers to an alignment in one, two, three, four, five or six degrees of freedom.

In an embodiment, the alignment of the at least part of the point cloud is based at least in part on at least one quality parameter assigned to the at least one obj ect.

In an embodiment, the method includes one or more additional regions are selected, wherein: in each region detect at least two objects; for each region realign the at least two objects; re-align at least part of the point cloud based at least in part on the objects detected in the selected regions.

In an embodiment, the method includes generating a second point cloud, the second point cloud including data from the selected region; identifying at least one correspondence between at least one second object in the second point cloud and at least one first object in the point cloud, the at least one first object being the realigned at least two objects; and aligning the second point cloud to the point cloud based at least in part on an alignment of the at least one first object and the at least one second object.

In an embodiment, the method includes the at least one second object consists of realigned at least two objects as described in claim 1.

It will be appreciated that aspects of the present disclosure may be embodied as a system, method, or computer program product and may take the form of a hardware embodiment, a software embodiment (including firmware, resident software, micro-code, etc.), or a combination thereof. Furthermore, aspects of the present disclosure may take the form of a computer program product embodied in one or more computer-readable medium(s) having computer-readable program code embodied thereon.

One or more computer-readable medium(s) may be utilized. The computer-readable medium may be a computer-readable signal medium or a computer-readable storage medium. A computer-readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer-readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In one aspect, the computer-readable storage medium may be a tangible medium containing or storing a program for use by or in connection with an instruction execution system, apparatus, or device.

A computer-readable signal medium may include a propagated data signal with computer-readable program code embodied therein, for example, in baseband or as part of a carrier wave. Such a propagated signal may take any of a variety of forms, including, but not limited to, electro-magnetic, optical, or any suitable combination thereof. A computer-readable signal medium may be any computer-readable medium that is not a computer-readable storage medium, and that can communicate, propagate, or transport a program for use by or in connection with an instruction execution system, apparatus, or device.

The computer-readable medium may contain program code embodied thereon, which may be transmitted using any appropriate medium, including but not limited to wireless, wireline, optical fiber cable, RF, etc., or any suitable combination of the foregoing. In addition, computer program code for carrying out operations for implementing aspects of the present disclosure may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server.

It will be appreciated that aspects of the present disclosure are described herein with reference to flowchart illustrations and/or block diagrams of methods, apparatus (systems) and computer program products according to embodiments of the invention. It will be understood that each block or step of the flowchart illustrations and/or block diagrams, and combinations of blocks or steps in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer-readable medium that can direct a computer, other programmable data processing apparatus, or other devices to function in a particular manner, such that the instructions stored in the computer-readable medium produce an article of manufacture including instructions which implement the function/act specified in the flowchart and/or block diagram block or blocks. The computer program instructions may also be loaded onto a computer, other programmable data processing apparatus, or other devices to cause a series of operational steps to be performed on the computer, other programmable apparatus or other devices to produce a computer-implemented process such that the instructions which execute on the computer or other programmable apparatus provide processes for implementing the functions/acts specified in the flowchart and/or block diagram block or blocks.

Terms such as processor, controller, computer, DSP, FPGA are understood in this document to mean a computing device that may be located within an instrument, distributed in multiple elements throughout an instrument, or placed external to an instrument.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the disclosure is provided in detail in connection with only a limited number of embodiments, it should be readily understood that the disclosure is not limited to such disclosed embodiments. Rather, the disclosure can be modified to incorporate any number of variations, alterations, substitutions or equivalent arrangements not heretofore described, but which are commensurate with the spirit and scope of the disclosure. Additionally, while various embodiments of the disclosure have been described, it is to be understood that the exemplary embodiment(s) may include only some of the described exemplary aspects. Accordingly, the disclosure is not to be seen as limited by the foregoing description, but is only limited by the scope of the appended claims.

## Claims

1. A method of correcting a point cloud, the method comprising:
selecting a region within the point cloud;
identifying at least two objects within the region;
realigning the at least two objects; and
aligning at least a portion of the point cloud based at least in part on the realigning of the at least two objects.

2. The method of claim 1, wherein the selecting of the region is based at least in part on a metadata acquired during an acquisition of the point cloud.

3. The method of claim 2, wherein the metadata includes at least one of: a number of features; a number of targets; a quality attribute of targets; a number of 3D points in the point cloud; a tracking stability parameter; and parameters related to a movement of a scanning device during the acquisition of the point cloud.

4. The method of claim 1, further comprising searching through the point cloud and identifying points within the region prior to identifying the at least two objects.

5. The method of claim 1, wherein:
the at least two objects includes at least one of: a geometric primitive; at least one surface of the geometric primitive; texture; a well-defined 3D geometry, a plane, and a plurality of planes;
the geometric primitive includes one or more of a cube, a cylinder, a sphere, a cone, a pyramid, or a torus; and
the texture includes a color, a plurality of adjacent colors, a machine readable symbol, or a light pattern projected onto a surface.

6. The method of claim 1, wherein:
the at least two objects includes a first object and a second object, the first object being defined by a plurality of first points and the second object being define by a plurality of second points, the plurality of first points having a first attribute, the plurality of second points having a second attribute;
the first attribute is a first time and the second attribute is a second time, the second time being different than the first time; and
the point cloud is at least partially composed of a plurality of frames, each frame having at least one point.

7. The method of claim 7, further comprising:
dividing the region into a plurality of voxels;
identifying a portion of the plurality of frames associated with the region;
for each frame within the portion of the plurality of frames, determining a percentage of points located within the plurality of voxels; and
assigning the plurality of frames into groups based at least in part on the percentage of points.

8. The method of claim 1, further comprising determining at least one correspondence between the at least two objects.

9. The method of claim 8, further comprising:
assigning an identifier to objects within the point cloud, and wherein the at least one correspondence between the at least two objects is based at least in part on the identifier of the at least two objects; and
wherein the at least one correspondence between the at least two objects is based at least in part on an attribute that is substantially the same for the at least two objects.
wherein the attribute is a one of a texture or a shape type, the shape type being one of a plane, a plurality of connected planes, a sphere, a cylinder, or a well defined 3D geometry.

10. The method of claim 8, wherein:
the at least one correspondence between the at least two objects is based at least in part on at least one position coordinate of each of the at least two objects; and
further comprising comparing a distance between the at least one position coordinate of each of the at least two objects to a predetermined distance threshold.

11. The method of claim 8, wherein:
the at least one correspondence between the at least two objects is based at least in part on at least one angular coordinate of each of the at least two objects; and
further comprising comparing a distance between the at least one angular coordinate for each of the at least two objects to a predetermined angular threshold.

12. The method of claim 8, wherein:
the at least one correspondence between the at least two objects is based at least in part on a consistency criterion; and
the consistency criterion includes two planes penetrating each other.

13. The method of claim 1, wherein the realigning of the at least two objects or at least part of the point cloud includes aligning at least one degree of freedom of the at least two objects.

14. The method of claim 1, wherein the alignment of at least a portion of the point cloud is based at least in part on at least one object quality parameter associated with at least one of the at least two objects.

15. The method of claim 1, further comprising:
defining a first object from the realigning of the at least two objects;
generating a second point cloud, the second point cloud including data from the selected region;
identifying at least one second object in the second point cloud;
identifying a correspondence between at least one second object in the second point cloud and the first object; and
aligning the second point cloud to the point cloud based at least in part on an alignment of the first object and the at least one second object.
